Europäisches Patentamt

European Patent Office

Office européen des brevets

(11) Numéro de publication: **0 403 376**
**A1**

## DEMANDE DE BREVET EUROPEEN

(21) Numéro de dépôt: **90401633.4**

(22) Date de dépôt: **13.06.90**

(51) Int. Cl.5: **G06K 1/12, G06K 5/00**

(30) Priorité: **14.06.89 FR 8907865**

(43) Date de publication de la demande:
**19.12.90 Bulletin 90/51**

(84) Etats contractants désignés:
**BE DE ES FR GB IT NL**

(71) Demandeur: **MASTER CODE INTERNATIONAL( MCI)**
**22 Rue des Deux Frères**

**F-94230 Cachan(FR)**

(72) Inventeur: **Collignon, Michel**
**3 Rue de Flandre**
**F-78310 Maurepas(FR)**

(74) Mandataire: **Bouju, André**
**Cabinet Bouju 38 avenue de la Grande Armée**
**F-75017 Paris(FR)**

(54) Code à barres comportant un témoin de tolérance d'impression.

(57) Le code à barres est constitué par une série de barres parallèles imprimées sur un support plan.

Il comporte au moins un témoin de tolérance d'impression ($T_1$) constitué par une série de traits parallèles situés à proximité des barres et servant à déterminer si le code à barres imprimé ultérieurement à partir du code à barres précité satisfait les tolérances requises.

Utilisation pour faciliter le contrôle de l'impression des codes à barres.

FIG.1

La présente invention concerne un code à barres constitué par une série de barres parallèles imprimées sur un support plan.

On sait que les articles commercialisés comportent maintenant de plus en plus, un code à barres imprimé sur leur emballage.

Un lecteur permet à partir de ce code à barres d'identifier l'article et de rechercher le prix de celui-ci dans un fichier.

Pour éviter des erreurs de lecture, l'épaisseur des barres et l'espacement de celles-ci sur le code à barres imprimé doivent répondre à des tolérances bien précises. Ces tolérances varient habituellement entre ± 0,035 et ± 0,256 mm suivant le grossissement choisi.

Dans la pratique, lorsqu'un industriel désire apposer un code à barres sur un article, il en fait la commande chez un spécialiste réalisateur de code à barres, tel que la demanderesse.

Ce spécialiste réalise ce code à barres sur un film photographique, au moyen d'un photo-traceur à faisceau laser.

La pellicule ainsi réalisée s'appelle un typon.

Dans la réalisation de ce typon, on doit tenir compte de la méthode d'impression utilisée ultérieurement pour reproduire le code à barres du typon sur un support définitif.

Ainsi cette impression peut être réalisée par exemple par offset, flexographie ou sérigraphie, ou autre procédé.

Toutes ces méthodes d'impression conduisent à un léger grossissement ou gain de l'épaisseur des barres du code à barres ou plus rarement suivant les opérations intermédiaires à un amaigrissement de cette épaisseur.

Ainsi, si le typon ne tient pas compte de la méthode d'impression choisie, le code à barres imprimé sur le support définitif risque d'être hors tolérance.

De ce fait, les typons sont réalisés avec une réduction de largeur des barres d'une manière telle que les codes à barres imprimés à partir de ces typons soient dans les tolérances requises.

Après impression de ces codes à barres, il convient toutefois de vérifier si ceux-ci, compte tenu de la méthode d'impression utilisée, ont bien été réalisés dans les tolérances requises.

Le but de la présente invention est précisément de réaliser un code à barres qui permette de contrôler facilement si les tolérances requises sont bien respectées.

L'invention vise ainsi un code à barre constitué par une série de barres parallèles imprimées sur un support plan.

Suivant l'invention, ce code à barres est caractérisé en ce qu'il comporte un témoin de tolérance d'impression constitué par plusieurs traits parallèles situés à proximité des barres et servant à déterminer si le code à barres imprimé ultérieurement à partir du code à barre précité satisfait les tolérances requises.

Grâce à ce témoin de tolérance, il est possible de vérifier si le code à barres imprimé respecte les tolérances requises, en ce qui concerne l'épaisseur des barres.

Du fait que ce témoin de tolérance soit imprimé dans les mêmes conditions que le code à barres proprement dit et figure à proximité de ce dernier, il permet un contrôle extrêmement précis et fiable.

Ce témoin est tracé en même temps que le code à barres sur un film photographique de façon à constituer un typon.

Selon une version avantageuse de l'invention, les traits du témoin sont espacés d'une distance correspondant à la tolérance d'impression plus environ 20 μm.

Ainsi, si l'impression du code à barres est réalisée avec un engraissement de la largeur des traits correspondant à la tolérance maximale, il subsistera entre les traits un filet "blanc" d'épaisseur égale à 20 μm tout juste visible à l'oeil nu.

En revanche, si l'engraissement dépasse la tolérance, aucun filet ne sera visible entre les traits du témoin. Le dépassement de la tolérance maximale est ainsi très facilement vérifiable.

De préférence, le témoin comprend trois traits espacés.

Selon une version préférée de l'invention, le témoin comprend au moins deux témoins situés respectivement aux extrémités opposées du code à barres.

Les deux témoins se situent de préférence au droit des barres d'extrémité appelées séparateurs d'extrémité et dans l'alignement des chiffres d'identification.

Cette disposition des témoins augmente la fiabilité du contrôle et ne risque pas de fausser la lecture effectuée par le lecteur de codes à barres.

Selon une version améliorée de l'invention, le code à barres est caractérisé en ce qu'il comprend en outre un témoin d'amaigrissement de l'impression.

D'autres particularités et avantages de l'invention apparaîtront encore dans la description ci-après.

Aux dessins annexés donnés à titre d'exemples non limitatifs :

- la figure 1 montre un code à barres à échelle agrandie muni de témoins de tolérance d'impression,

- la figure 2 est une vue à plus grande échelle d'un témoin d'engraissement de l'impression,

- la figure 3 est une vue à plus grande échelle d'un témoin d'amaigrissement de l'impression,

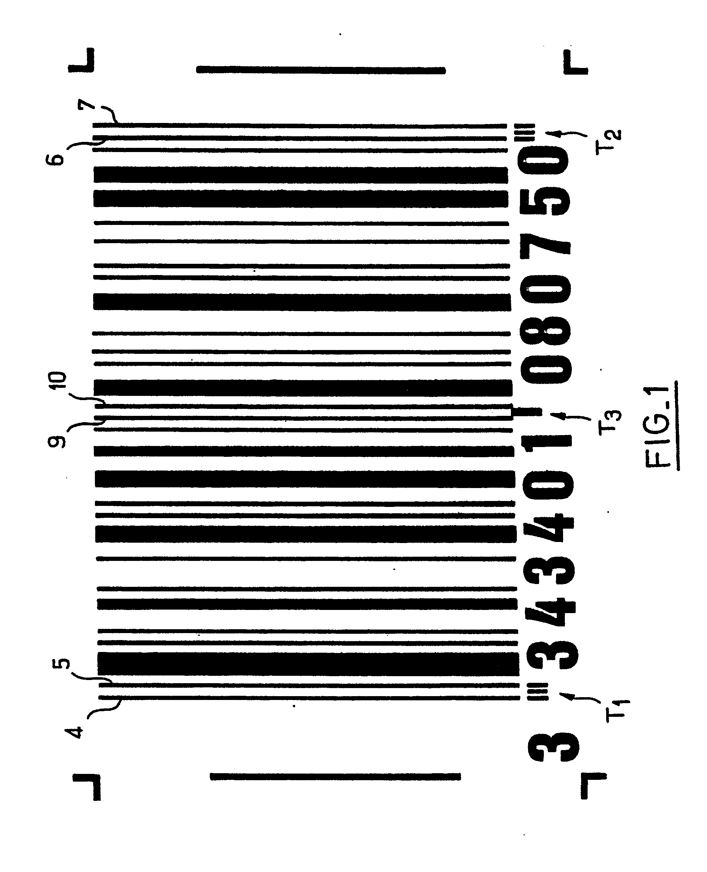

Sur la figure 1, le code à barres est constitué par une série de barres parallèles imprimées sur un film photographique.

Conformément à l'invention, il comporte des temoins de tolérance d'impression $T_1$, $T_2$, $T_3$ constitués par plusieurs traits parallèles situés à proximité des barres et servant à déterminer si le code à barres imprimé ultérieurement à partir du code à barre précité satisfait les tolérances requises.

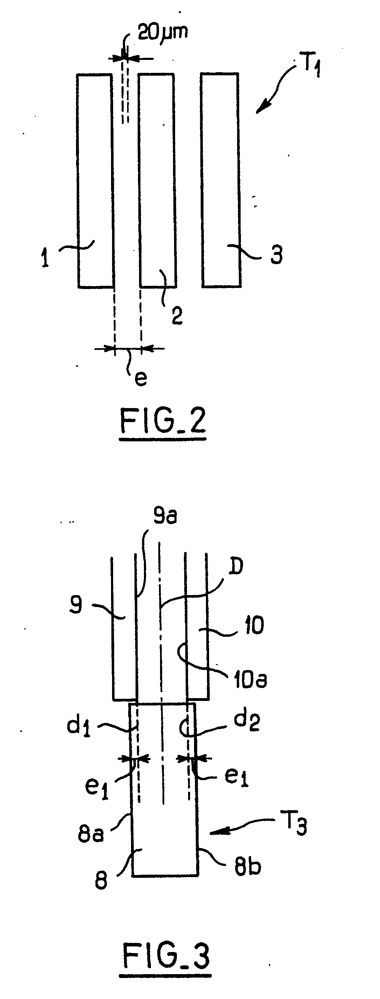

Comme on le voit sur la figure 2, les trois traits 1, 2, 3 du témoin $T_1$ sont espacés d'une distance e correspondant à la tolérance d'impression plus environ 20 $\mu$m.

Les deux témoins $T_1$ et $T_2$ sont identiques et sont situés respectivement aux extrémités opposées du code à barres. Dans l'exemple représenté, les deux témoins $T_1$, $T_2$ se situent au droit des barres d'extrémité 4, 5 ; 6, 7 également appelées séparateurs et dans l'alignement des chiffres d'identification du code à barres.

Le code à barres représenté sur la figure 1 comprend en outre un témoin $T_3$ d'amaigrissement de l'impression.

Ce témoin $T_3$ comprend (voir figure 3) un trait 8 centré sur une droite D équidistante de deux barres 9, 10 ou séparateurs. Les bords 8a, 8b du trait 8 débordent de chaque côté d'une droite $d_1$, $d_2$ alignée sur le bord intérieur 9a, 10a des deux séparateurs 9, 10, d'une distance $e_1$ égale à la tolérance d'amaigrissement de l'impression.

On voit sur la figure 1, que le trait $T_3$ se situe au droit des deux séparateurs centraux 9, 10 du code à barres.

On va maintenant justifier les avantages du code à barres que l'on vient de décrire.

Tout d'abord du fait de leur position, les témoins $T_1$, $T_2$, $T_3$ ne risquent pas de gêner la lecture du code par un lecteur.

Les deux témoins d'extrémité $T_1$, $T_2$ permettent de contrôler l'engraissement de l'impression. Les traits 1, 2, 3 de ces témoins sont espacés de telle sorte qu'après impression et malgré l'augmentation de la largeur des traits en résultant, il doit subsister entre ces traits, un filet "blanc" de largeur de l'ordre de 20 $\mu$m.

Si ce filet est invisible sur le code imprimé, les témoins $T_1$, $T_2$ révèleront par un simple examen visuel que l'engraissement des traits et par suite des barres elles-mêmes a dépassé la tolérance maximale requise. La lecture d'un tel code à barres risquera alors d'être impossible.

Le fait que deux témoins $T_1$ et $T_2$ soient disposés aux extrémités du code à barres permet de fiabiliser le contrôle, car l'impression peut entraîner des différences au niveau des extrémités opposées du code à barres.

Le témoin central $T_3$ permet de contrôler un éventuel amaigrissement de l'impression. Si cet amaigrissement est tel que les bords 8a, 8b du trait 8 affleurent les droites $d_1$, $d_2$ correspondant aux bords intérieurs des espaceurs 9 et 10, cela signifiera que l'amaigrissement a atteint le seuil de la tolérance.

Si l'on observe que les bords du trait sont en retrait par rapport aux droites $d_1$ et $d_2$, cela signifiera que le seuil de tolérance est dépassé et que l'impression n'est pas acceptable.

Bien entendu, l'invention n'est pas limitée à l'exemple de réalisation que l'on vient de décrire et on peut apporter à celui-ci de nombreuses modifications sans sortir du cadre de l'invention.

Ainsi, l'invention peut également s'appliquer aux codes à barre réalisés par des imprimantes thermiques, à transfert thermique matriciel, à laser et autres.

## Revendications

1. Code à barres constitué par une série de barres parallèles imprimées sur un support plan, caractérisé en ce qu'il comporte un témoin de tolérance d'impression ($T_1$) constitué par plusieurs traits parallèles (1, 2, 3) situés à proximité des barres et servant à déterminer si le code à barres imprimé ultérieurement à partir du code à barre précité satisfait les tolérances requises.

2. Code à barres conforme à la revendication 1, caractérisé en ce que les traits (1, 2, 3) du témoin ($T_1$) sont espacés d'une distance (e) correspondant à la tolérance d'impression plus environ 20 $\mu$m.

3. Code à barres conforme à l'une des revendications 1 ou 2, caractérisé en ce que le témoin ($T_1$) comprend trois traits espacés.

4. Code à barres conforme a l'une des revendications 1 à 3, caractérisé en ce qu'il comprend au moins deux témoins ($T_1$, $T_2$) situés respectivement aux extrémités opposées du code à barres.

5. Code à barre conforme à la revendication 4, caractérisé en ce que les deux témoins ($T_1$, $T_2$) se situent au droit des barres d'extrémité (4, 5 ; 6, 7) et dans l'alignement des chiffres d'identification.

6. Code à barres conforme à l'une des revendications 1 à 5, caractérisé en ce qu'il comprend en outre un témoin ($T_3$) d'amaigrissement de l'impression.

7. Code à barres conforme à la revendication 6, caractérisé en ce que ledit témoin ($T_3$) comprend un trait (8) centré sur une droite (D) équidistante de deux barres (9, 10) appelées séparateurs, les bords (8a, 8b) dudit trait débordant de chaque côté d'une droite ($d_1$, $d_2$) alignée sur le bord intérieur (9a, 10a) des deux séparateurs d'une distance égale à la tolérance d'amaigrissement de l'impression.

8. Code à barres conforme a la revendication 7, caractérisé en ce que ledit trait (8) se situe au droit des deux séparateurs centraux (9, 10) du code à barres.

FIG_1

EP 0 403 376 A1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 8, no. 87 (M-291)[1524], 20 avril 1984, page 11 M 291; & JP-A-59 2863 (FUJITSU K.K.) 09-01-1984 * Abrégé en entier * --- | 1 | G 06 K  1/12<br>G 06 K  5/00 |
| A | EP-A-0 116 943 (MAATSCHAPPIJ VAN BERKEL'S PATENT) * Résumé; figures 3,6; page 11, ligne 27 - page 12, ligne 15 * --- | 1,7 | |
| A | DE-C-3 422 221 (T.K. STRICHCODE) * Résumé; figure 1 * --- | 1 | |
| A | FR-A-2 301 878 (PASTORIUS) * Figures 2,4,12; page 5, ligne 24 - page 8, ligne 4 * ----- | 1 | |

DOMAINES TECHNIQUES
RECHERCHES (Int. Cl.5)

G 06 K

Le présent rapport a été établi pour toutes les revendications

| Lieu de la recherche | Date d'achèvement de la recherche | Examinateur |
|---|---|---|
| LA HAYE | 20-09-1990 | FORLEN G.A. |

EPO FORM 1503 03.82 (P0402)